# EUROPÄISCHE PATENTSCHRIFT

(11) **EP 1 937 076 B1**
(45) Veröffentlichungstag und Bekanntmachung des Hinweises auf die Patenterteilung: **27.06.2018**
(21) Anmeldenummer: 05808000.3
(22) Anmeldetag: 11.10.2005
(51) Int. Cl.: A21B 3/13, A21C 13/00

(54) **VORRICHTUNG ZUR AUFNAHME VON TEIGLINGEN, INSBESONDERE FÜR DEREN GÄRUNG**
RECEPTACLE FOR DOUGH PIECES, FOR EXAMPLE FOR LEAVENING THE LATTER
MOULE RÉCEPTEUR POUR DES PORTIONS DE PÂTE, PAR EXEMPLE POUR LES FAIRE LEVER

(43) Veröffentlichungstag der Anmeldung: 02.07.2008
(73) Patentinhaber: Birnbaum-Kaiser, Maria Magdalena, 97289 Thüngen (DE)
(72) Erfinder: BIRNBAUM-KAISER, Maria Magdalena, 97289 Thüngen (DE); JOHANNSEN, Julia, 97084 Würzburg (DE); BIRNBAUM, Martha Diana, 97289 Thüngen (DE); BIRNBAUM, Ernst Christoph, 97289 Thüngen (DE)
(74) Vertreter: Götz, Georg Alois
(86) Internationale Anmeldenummer: PCT/EP2005/055155
(87) Internationale Veröffentlichungsnummer: WO 2007/042072

(56) Entgegenhaltungen:
- CH-A- 408 825
- DE-A1- 2 933 543
- DE-C- 926 362
- DE-U- 8 407 432
- DE-U1- 8 305 722
- DE-U1- 8 405 177
- DE-U1- 8 620 833
- DE-U1- 9 210 256

## Beschreibung

Die Erfindung betrifft eine Vorrichtung mit einer Aufnahmeform für Teiglinge insbesondere zu deren Gärung.

Gattungsgemäße Vorrichtungen sind beispielsweise als Brotform-Gärkörbe aus Kunststoff (DE-U-92 10 256.5) bzw. Kunststoff-Brotformbehälter (DE-U-84 05 177.9) bekannt.

Die gattungsgemäßen Fundstellen reflektieren ein beachtliches Bedürfnis, eine unter hygienischen Gesichtspunkten optimierte Teig-Aufnahmevorrichtung zu schaffen. Zur Abhilfe wird auf die im Anspruch 1 angegebene Vorrichtung verwiesen, wonach vorgeschlagen wird, den Formboden und die Formseitenwände aus Kunststoff herzustellen, was eine vorteilhafte Optimierung unter hygienischen Gesichtspunkten ergeben soll.

Aus dem vorbekannten Firmenprospekt "RINGOPLAST - Kunststoffartikel für Bäcker und Konditoren" bzw. der eingangs genannten Fundstelle DE-U-92 10 256.5 sind Kunststoff-Brotformen bekannt, bei denen die Seitenwände mit horizontalen Luftschlitzen zur Vermeidung eines Verklebens der Teigmasse mit der Forminnenwandung und einer angerauten Innenfläche für eine gute Haftung der Ausstaubung beziehungsweise Bemehlung gestaltet sind. Mit der horizontalen Ausrichtung der Luftschlitze ist allerdings der Nachteil verbunden, dass sich Abluft mit darin enthaltener Feuchtigkeit aus dem Formeninneren bzw. aus der Teigmasse nicht effektiv wegtransportieren lässt. Zur Abhilfe wird die im Anspruch 1 angegebene Teiglings-Aufnahmevorrichtung vorgeschlagen. Demnach sind die Seitenrippen auf der Außenseite der Form im Bereich der von ihnen begrenzten Durchbrechungen derart kurvenförmig und/oder gekrümmt ausgebildet sind, dass eine an die Kurve bzw. Krümmung einer Seitenrippe angelegte Außentangente derart geneigt ist, dass sie mit der Ebene des (Formen-)Bodens einen Winkel größer als Null einschließt. Dieser liegt zwischen 5° und 85°. Damit lassen sich Abluftwege schaffen, die gegenüber der Bodenebene schräg nach oben gerichtet sind. Mit einer derart gestalteten Außenseite der Seitenrippen lässt sich eine günstige Stellung für Thermik und Feuchtigkeit erzielen: Die beim Schwitzen beispielsweise eines Brotteiglings im Gärprozess auftretende Feuchtigkeit nebst innewohnender Wärme kann leichter und effektiver aus der erfindungsgemäßen Aufnahme- beziehungsweise Vorrichtungsform abwandern beziehungsweise entweichen. Dadurch werden Feuchtigkeitsstau innerhalb der Teiglings-Aufnahmeform und die Tendenz des Teiglings zum Kleben an der Form-Innenwandung vermindert.

Nachdem aufgrund der Lüftungsschlitze die Seitenrippen der erfindungsgemäßen Vorrichtungsform Abstände voneinander aufweisen, stellt sich die Anforderung nach einer ausreichenden Stabilisierung des Verbunds der Seitenrippen. Dem wird mit einer besonderen Ausbildung der Erfindung begegnet, wonach die Seitenrippen durch vorzugsweise zum Boden verlaufende Verbindungsstege miteinander verbunden sind.

Im Zusammenhang mit den genannten Verbindungsstegen ist der Weg zu einer weiteren optionalen, vorteilhaften Ausbildung eröffnet, nach welcher im oberen Bereich der Verbindungsstege Stapeleinrichtungen zum Platz sparenden Stapeln der Form beispielsweise auf anderen Formen oder sonstigen Gegenständen vorgesehen sind. Damit lässt sich eine Lagerhaltung der erfindungsgemäßen Formen verbilligen.

Zur Erleichterung des Entformens bzw. Entnehmens der Teiglinge sind nach einer optionalen Ausgestaltung die Innenseiten der Seitenrippen gegenüber der Bodenebene derart gegebenenfalls kurvenförmig gekrümmt und/oder geneigt verlaufend gestaltet, dass eine an die Innenseite gelegte Tangente mit einer quer oder senkrecht zum Boden verlaufenden Bodennormalen einen Winkel einschließt, der sich vom Bereich des Formbodens ausgehend mit zunehmender Nähe zur Formoberkante bzw. zum Öffnungsrand verkleinert. Damit wird die Öffnungsweite der Seitenrippen in Richtung zur oberen Aufnahmeöffnung zwar immer noch vergrößert, wobei aber im unteren Bodenbereich bereits eine überproportionale Ausbauchung bzw. Aufweitung des Durchmessers oder der lichten Weite aufgrund der dort verstärkten Neigung der Innenwandung nach außen erzielt wird. So lässt sich eine Ausrundung bzw. ein gerundeter Übergang zwischen dem Boden und den Seitenwänden der Form unter Vermeidung kantiger Ausprägungen schaffen, was das Entnehmen des Teiglings erleichtert.

Zur Begünstigung des Gärverhaltens der Teiglinge und zur weiteren Erleichterung des Entformungsvorgangs ist nach einer optionalen Erfindungsausbildung vorgesehen, dass der Boden der Form aus Bodenrippen beispielsweise in einer Flechtstruktur oder parallelen Struktur gebildet ist, zwischen welchen zumindest teilweise Durchbrechungen als Lüftungsschlitze oder dergleichen angeordnet sind. Einem Vakuumverhalten, zu welchem naturgemäß im Formeninneren mit aufgenommenem, gärenden Teigling eine Tendenz besteht, wird entgegengewirkt. Indem die Bodenrippen wegen der Lüftungsschlitze oder sonstigen Durchbrechungen abschnittsweise Abstände voneinander aufweisen, sind zur Verbindung der Bodenrippen untereinander Fuß-Stege zweckmäßig. Diese können beispielsweise in Form eines Sechssterns oder sonstigen Sterns angeordnet sein und von der Unterseite der Seitenrippen nach außen bzw. unten unter Bildung eines oder mehrerer Formenfüße vorspringen. Beispielsweise lässt sich ein Formenfuß in Ringform gestalten, wobei es aber im Rahmen der Erfindung vorteilhaft ist, auch diesen mit Durchbrechungen zum Formboden zur Herbeiführung einer Belüftung der Teiglinge von unten auch auf glatten Standflächen zu versehen.

Für die Innenflächenstruktur der Form ist ein besonderer Rauheitsgrad anzustreben, damit Mehl als Trennmittel für Teiglinge optimal auf der Innenwandungsoberfläche der Form haften bleibt. Dem dient eine Erfindungsausbildung, wonach auf der Form-Innenseite einer, mehrerer oder aller Seiten- oder Bodenrippen Riefen, Rillen oder sonstige Vertiefungen und/oder Erhöhungen ausgebildet sind, die im Falle der Seitenwandungen parallel zur Bodenebene und/oder einer Aufnahme-Öffnungsebene verlaufen. Die Riefen oder Rillen können zur Bildung eines sägezahnähnlichen Geamt-Profils auf der Innenseite der Seitenwandung ausgestaltet sein, wobei sich Mehl auf horizontal oder schräg nach oben weisenden oder horizontal beziehungsweise bodenparallel verlaufenden Auflageflächen der Sägezahn-Stufen ablagern kann. Alternativ kann für Mehlablagerung auch eine treppenförmige Oberflächenprofilierung dienen.

Alternativ oder zusätzlich zu den Riefen oder Rillen oder sonstigen Vertiefungen können zur Verstärkung der Mehl-Rückhaltefunktion Rückhalte-Sockel oder sonstige Rückhalte-Erhebungen auf der Innenseite einer, mehrerer oder aller Seitenrippen ausgebildet sein. Diese können auf der Innenseite vorzugsweise ringartig umlaufen oder in Umfangsrichtung stellen- oder abschnittsweise als eine Reihe mit diskreten Einzelsockeln angeordnet sein. Dabei wird zweckmäßig mit der Grenzfläche zur Seitenrippe ein im Wesentlichen dreiecksförmiger Querschnitt gebildet. Ein weiterer Vorteil der Mehlrückhaltesockel auf der Innenseite der Seitenwände besteht - neben der Begünstigung der Mehlablagerung - in der Bildung von Mehlkonturen auf dem Teigling, beispielsweise Brotteigling, wodurch sich die Teiglingsentformung weiter optimieren lässt. Der letzte Gesichtspunkt lässt sich mit einer weiteren Ausbildung der Erfindung fördern, indem ein in das Innere der Form gerichteter Schenkel des dreiecksförmigen Querschnitts des Rückhalte-Sockels gegenüber der Bodennormalen nach außen zur angrenzenden Seitenwandung hin geneigt ist. Damit wird gleichsam eine entformungsgünstig verlaufende Rampe nach schräg oben und außen erzielt.

Gemäß einer anderen optionalen Ausbildung ist die Form aus einem geschäumten und/oder porösen Kunststoff oder Kunststoffverbund mit mehreren Material- und/oder Stoffkomponenten hergestellt. Dem können noch Zuschlagsstoffe wie z. B. Holz, Zellstoff und/oder Hornspäne hinzugefügt sein. Mit der Verwendung von geschäumtem und/oder porösem Kunststoff wird der Effekt einer verstärkten Wärmedämmung und eines besseren Feuchtigkeits-Rückstauverhaltens der Form gegenüber dem Teigling erzielt. Damit gehen ein geringerer Feuchtigkeitsniederschlag an der Form-Innenwandung und damit eine Verminderung der Tendenz zum Kleben einher. Ein weiterer Vorteil der Verwendung von geschäumtem und/oder porösem Kunststoff besteht in einer stärkeren Reflexion von Wärme zurück zum Teigling. Für diesen wird so der Effekt eines gleichmäßigeren Gärverhaltens gewonnen. Als zweckmäßiges Kunststoffmaterial kommt beispielsweise Polypropylen in Betracht, was einer Herstellung mittels Spritzguss entgegen kommt. Alternativ ist auch Polyurethanschaum zweckmäßig.

Um für den in der Form befindlichen Teigling ein gleichmäßiges Gärverhalten zu begünstigen, wird gemäß einer optionalen Erfindungsausbildung ein Kunststoff mit heller und damit Temperatur reflektierender Farbe verwendet. Der damit erzielbare Vorteil kommt besonders bei Gärunterbrechungstechnik zur Geltung. Ein weiterer Vorteil besteht in der verbesserten Schmutzerkennung, was wiederum hilft, hohen Hygieneanforderungen besser gerecht zu werden. Mit dem Kunststoff mit heller, Wärme reflektierender Farbe lässt sich der weitere Vorteil erzielen, dass die Tendenz zur Kondenswasserbildung an der Seitenwand-Innenseite der Form eingeschränkt wird, weil ja mit der reflektierenden Wärmestrahlung gleichzeitig Feuchtigkeit in das Forminnere auf den Teigling zurückgeworfen wird. Als zweckmäßige Farbbeispiele haben sich Farben wie hellblau, helles Elfenbein etwa gemäß RAL 1015 und/oder weißgrün etwa gemäß RAL 6019 erwiesen.

Es ist anzustreben, die erfindungsgemäße, formgebende Teiglingsaufnahmevorrichtung an Formenträgern der industriellen Teiglingsverarbeitung befestigen zu können. Dazu sind als äußere Befestigungsmöglichkeit Bodensteg- oder Bodenrandverlängerungen in Verbindung mit Schrauben oder anderen Befestigungsmitteln denkbar.

Gemäß einer vorteilhaften Erfindungsausbildung sind im oder am Formboden Halterungs- und/oder Befestigungsmittel vorgesehen, welche mit einem Einsteckloch und/oder einer Führungsnut beispielsweise zum Eingriff durch die Formenträger realisiert sein können. Zweckmäßig ist die Führungsnut mit einem Querschnittsprofil in Schwalbenschwanzform gestaltet. Eine Anbringung dieser Halterungs- und/oder Befestigungsmittel an der Außen- oder Unterseite des Formbodens erscheint praktikabel.

Den genannten Halterungs- oder Befestigungsmittel können komplementäre Halterungsmittel auf den Formenträgern zugeordnet sein. Im Falle der Einstecklöcher oder Schwalbenschwanznuten sind zur Festlegung bzw. Arretierung der erfindungsgemäßen Vorrichtung beziehungsweise Form Klipps beziehungsweise Schnapphaken oder sonstige Einrastmittel besonders geeignet, die sich ohne besonderes Werkzeug einfach und kostengünstig als separate Einzelteile fertigen lassen. Die genannten Halterungssysteme eignen sich auch zur schnellen Aufnahme auf Transportbändern beispielsweise für Reinigungszwecke oder automatische Teiglings-Belegesysteme. Das genannte Befestigungssystem erleichtert vorteilhaft den Einsatz der erfindungsgemäßen Vorrichtung in Waschstraßen.

Das oben angesprochene Querschnittsprofil in Schwalbenschwanzform ergibt den Vorteil, dass insbesondere in Verbindung mit Klipp-Arretierung die Notwendigkeit der Betätigung bzw. des Lösens von Schrauben beim Anbringen an Formenträger entfällt. Damit wird auch der Nachteil an sich bekannter Befestigungssysteme vermieden, dass sich Schraubenköpfe häufig auf dem Teigling abbilden.

Es liegt im Rahmen der Erfindung, dass die Form mehrteilig sein und aus mehreren zusammengesetzten Teilen bzw. separat hergestellten Einzelstücken bestehen kann. Mittels Nut- und Federverbindungen oder dergleichen lassen sich die Einzelstücke dauerhaft verbinden, wobei Rast- oder Schnapphaken-Mechanismen oder Klipps zur Festlegung bzw. Arretierung beitragen können. Gleichzeitig ist damit auch eine Lösbarkeit der Verbindung gewährleistet, indem beispielsweise Federklipps beziehungsweise -haken verstellt oder ausgelenkt werden.

Aus der eingangs angesprochenen Veröffentlichung DE-U-84 05 177 ist es bekannt, durch Einfügen eines Zwischen-Einzelstücks eine vorher runde Brotform in eine oval-längliche Brotform zu verlängern. Dem gegenüber fehlt es aber an der Möglichkeit, die runde oder oval-längliche Brotform auch verbreitern zu können. Abhilfe lässt sich mittels einer besonderen Erfindungsausbildung schaffen, wonach ein Zwischen-Einzelstück zwischen den längeren, gegenüberliegenden Breitseiten der Aufnahmeform eingefügt wird und sich von einer der kürzeren Schmalseiten zur anderen und damit über die gesamte Länge der Form erstreckt.

Weitere Einzelheiten, Merkmale, Merkmalskombinationen und Wirkungen auf der Basis der Erfindung ergeben sich aus der nachfolgenden Beschreibung bevorzugter Ausführungsbeispiele der Erfindung sowie aus den Zeichnungen. Diese zeigen mit jeweils schematischer Darstellung in:
- Figur 1: eine durch den Boden geschnittene Ansicht auf eine Form der erfindungsgemäßen Vorrichtung,
- Figur 1a: einen vergrößerten Ausschnitt aus Figur 1 zur Verdeutlichung des Querschnitts einer Seitenrippe,
- Figur 2: eine Unteransicht gemäß Richtung II in Figur 1,
- Figur 2a: eine Schnittansicht gemäß Linie IIa - IIa in Figur 2
- Figur2b: eine Schnittansicht gemäß Linie IIb - IIb in Figur 2a
- Figuren 3 und 4: jeweils in Draufsicht Möglichkeiten zur Veränderung der Form in Länge und Breite

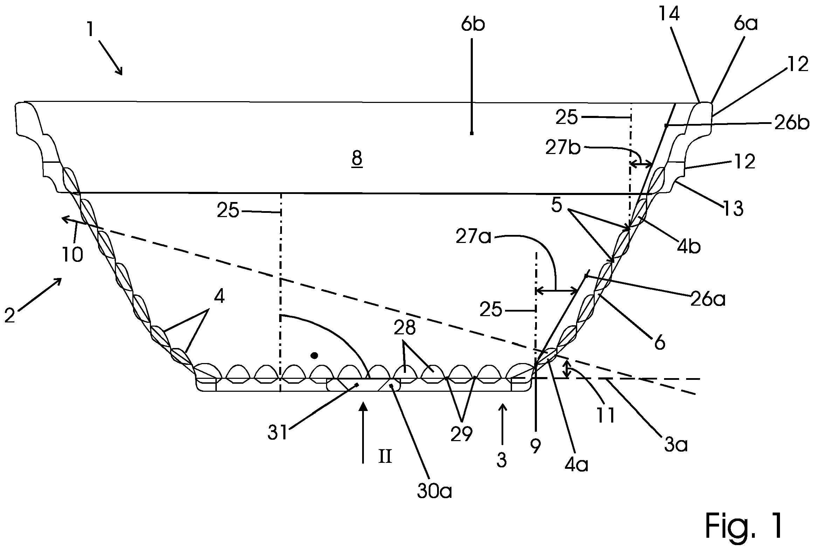

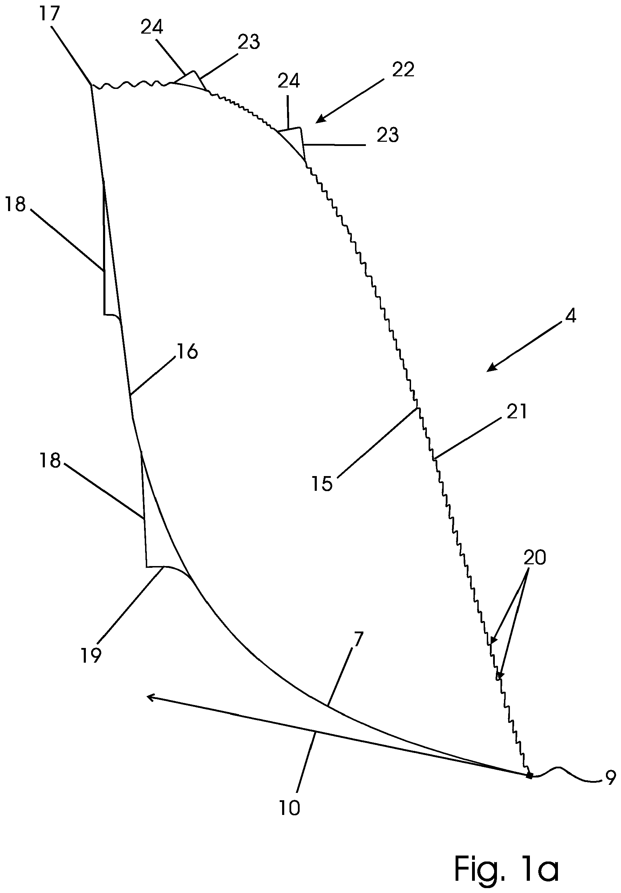

Gemäß Figur 1 ist die erfindungsgemäße Teiglings-Aufnahmevorrichtung als eine schalenartige, nach oben offene Form 1 mit einer Seitenwandung 2 und einem Boden 3 gestaltet. Die Seitenwandung 2 ist aus einer Mehrzahl nach unten abgestuft verbundener Seitenrippen 4 gebildet, zwischen welchen als Lüftungsschlitze dienende Durchbrechungen 5 ausgebildet sind. Der Verbindung der Seitenrippen dienen nach unten zum Boden 3 verlaufende Verbindungsstege 6. Zur Stabilisierung in Umfangsrichtung umgibt ein Umfangssteg 6b als Rand die zum Forminneren führende Öffnung der Form 1.

Wie auch aus Figur 1a ersichtlich, weisen die Seitenrippen 4 jeweils einen in ihrer näher zum Boden 3 liegenden Hälfte gelegenen, konvex nach außen zur Außenumgebung gewölbten Bogen- oder Krümmungsabschnitt 7 auf, der in einer zum Forminneren 8 oder zum Boden 3 weisenden Spitze 9 endet. Eine von dieser Spitze 9 ausgehende Außentangente 10 an den Kurvenabschnitt 7 markiert einen nach schräg oben führenden Abluftweg für warme, Feuchtigkeit enthaltende Luft aus dem Forminneren 8. Wie leicht aus Figur 1 erkennbar, bildet die (verlängerte) Außentangente 10 mit einer in den Boden 3 fallenden Ebene 3a einen Winkel 11 größer Null. Ein brauchbarer, beispielhafter Bereich für diesen Tangentenwinkel 11 könnte zwischen 5° und 15°, aber auch außerhalb dieses Bereichs liegen.

Gemäß Figur 1 sind die Verbindungsstege 6 im Bereich des Öffnungsrandes der Form 1 jeweils mit der Funktion einer Stapelnase 12 versehen, indem auf der Außenseite des Verbindungsstegs 6 im genannten Randbereich eine Kehlung 13 bzw. eine konkave Vertiefung ausgebildet ist. Mit besonderem Vorteil ist die Kehlung 13 bzw. der von ihr umgebene Aufnahmeraum komplementär zu einer konvexen Wölbung 14 am freien Ende des Verbindungsstegs 6 im Bereich des Öffnungsrandes geformt, um zum Zwecke des Aufeinanderstapelns mehrerer Formen 1 die konvexe Wölbung 14 in den Aufnahmeraum der Kehlung 13 formschlüssig einrücken und arretieren zu können. So lässt sich eine Brotform über ihre Stapelnase 12 auf dem freien Stegende 6a einer gleichartigen, darunter liegenden Form 1 absetzen, wobei aufgrund der Entfernung zwischen der Stapelnase 12 und dem freien Stegende 6a für die von oben aufgesetzte Form genug Luft bzw. Abstand zum Austrocknen während der Lagerung verbleibt. So sorgen die Stapelnasen dafür, dass ein Zwischenraum zwischen aufeinander gestapelten Formen entsteht, und dadurch die Formen besser auslüften können.

Gemäß Figur 1a setzt sich das Querschnittsprofil einer einzelnen Seitenrippe 4 aus einer Innenkurve 15 und einer Außenkurve 16 zusammen, deren konkave Krümmungen einander zugewandt sind und sich in der bereits genannten unteren Spitze 9 und einer zweiten bzw. oberen Spitze 17 treffen. Die Außenkurve 16 umfasst auch den genannten Krümmungsabschnitt 7. Auf der Außenseite bzw. Außenkurve 16 der Seitenrippe 4 sind vorspringende Griffnasen 18 jeweils mit einer etwa bodenparallelen Aufstandsfläche 19 ausgebildet. Die Griffnasen 18 können gleichartig auch an den Außenseiten der nach unten verlaufenden Verbindungsstege 6 ausgebildet sein. Auf der Innenseite bzw. Innenkurve 15 der Seitenrippe 4 ist die Außenfläche mittels eines Sägezahnprofils 20 aufgeraut, welches in Richtung Formöffnung weisende Mehl-Ablageflächen 21 bildet. Alternativ lässt sich die Oberflächenprofilierung auch treppenförmig ausgestalten. Ebenfalls zum Zurückhalten von Mehl dienen Mehlrückhaltesockel 22, die jeweils mit zwei Dreiecksschenkeln 23, 24 gebildet und dem Bereich der oberen Spitze 17 näher liegend auf die Innenseite 15 der Seitenrippe 4 angebracht sind. Zweckmäßig ist eine Herstellung der Mehlrückhaltesockel 22 mit der (sonstigen) Seitenrippe 4 als ein einziges Stück beispielsweise im Kunststoff-Spritzgussverfahren. Der innere bzw. untere Dreiecksschenkel 23 ist gegenüber einer Bodennormalen 25 (vgl. Figur 1) nach außen mit einem Schrägwinkel geneigt, um die Entformung des Teiglings zu begünstigen bzw. nicht zu behindern. Zweckmäßig sind die Mehlrückhaltesockel 22 kontinuierlich um die Bodennormale 25 umlaufend ausgebildet, können aber auch als in Umfangsrichtung voneinander beabstandete Einzelsockel ausgeführt sein. Wenn die Abstände nicht zu groß sind, wird gleichwohl immer noch eine ausreichende Mehlrutschsicherung auf der Seitenwand-Innenseite erreicht.

Gemäß Figur 1 bildet eine untere Innentangente 26a, die von der Spitze 9 einer zum Boden 3 nächstliegenden Seitenrippe 4a ausgeht und dort an deren Innenkurve 15 angelegt ist, mit der Bodennormalen 25 einen ersten bzw. unteren Entformungswinkel 27a. Dieser ist größer als ein analog gebildeter, oberer Entformungswinkel 27b, der zwischen einer oberen Innentangente 26b, angelegt an die Innenkurve 15 einer näher zum Öffnungsrand gelegenen Seitenrippe 4b, und der Bodennormalen 25 gebildet ist. Ein praktikabler Wert für den unteren Entformungswinkel 27a wäre beispielsweise 23°, für den oberen Entformungswinkel 27b 17°.

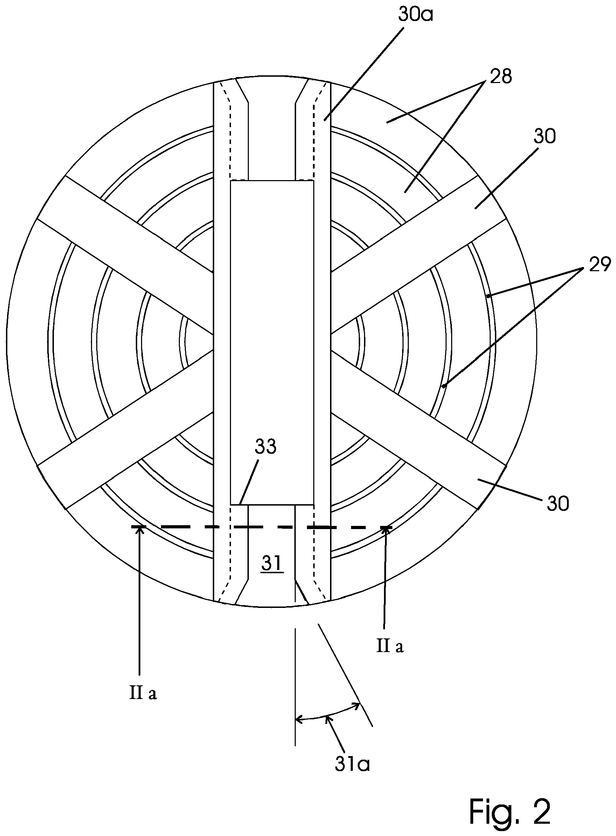

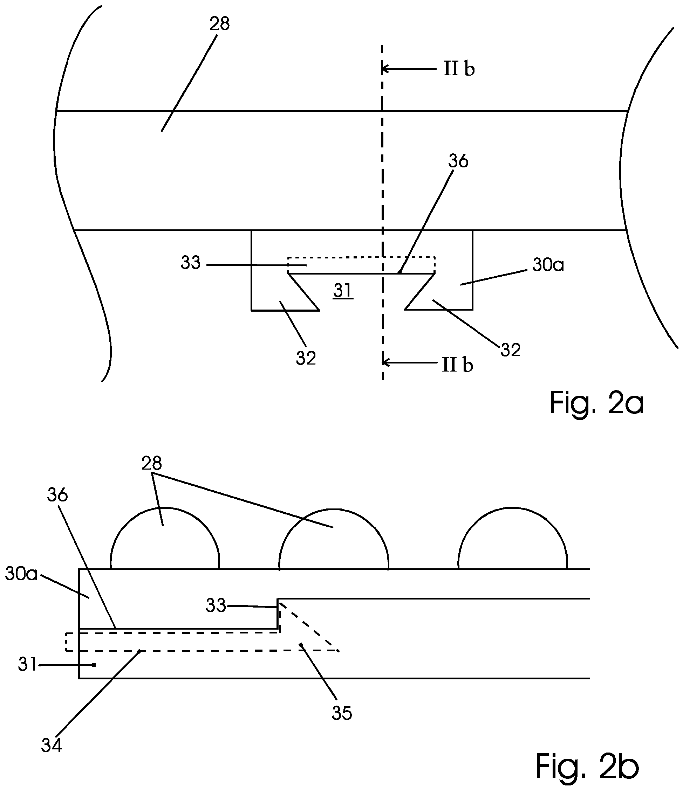

Gemäß Figur 1 in Verbindung mit der Unteransicht der Figur 2 ist auch der Boden 3 lamellenartig strukturiert, und zwar aus einer Vielzahl kreisringartig und zueinander konzentrisch verlaufender Bodenrippen 28, zwischen denen ebenfalls Abstände voneinander zur Bildung von im Beispiel kreisförmigen Bodenlüftungsschlitzen 29 vorgesehen sind. Der Bodenstabilisierung dienen mehrere Fußstege 30, 30a, die mit der jeweiligen Unterseite der Bodenrippen 28 verbunden sind.

Aus der Unteransicht der Figur 2 in Verbindung mit den Schnittdarstellungen gemäß Figur 2a, 2b ist das Befestigungssystem der erfindungsgemäßen Vorrichtung zum Haltern beispielsweise auf in der Backindustrie eingesetzte Formenträger ersichtlich. Dazu ist einer 30a der Fußstege 30, 30a verstärkt bzw. mit gegenüber den anderen erhöhter Breite ausgeführt. In seiner Längsrichtung wird der verbreiterte Fußsteg 30a von einer Führungsnut 31 mit querschnittlichem Schwalbenschwanzprofil durchsetzt, welche am Eingang zur Bildung einer zentrierenden Schlupföffnung über Keilwinkel 31a verbreitert ist. Die beiden gegenüberliegenden, keilförmigen Innenflanken 32 der Schwalbenschwanz-Führungsnut 31 enden an einer Abstufung 33, welche von einem federnden Klipp bzw. Schnapphaken 34 hintergriffen werden kann. Letztere kann Teil des genannten Formenträgers sein. Der Schnapphaken 34 wird in die Führungsnut 31 eingeführt, wobei zunächst das Hakenende 35 von der Nutbasis 36 nach unten gedrückt wird und nach Erreichen der End-Abstufung 33 nach oben federn und letztere zur Festlegung hintergreifen kann. Zum manuellen Lösen dieser Einschnapp- bzw. Einrastbefestigung kann eine (nicht gezeichnete) Aussparung an der Seitenwandung des Fußstegs 30a vorgesehen sein.

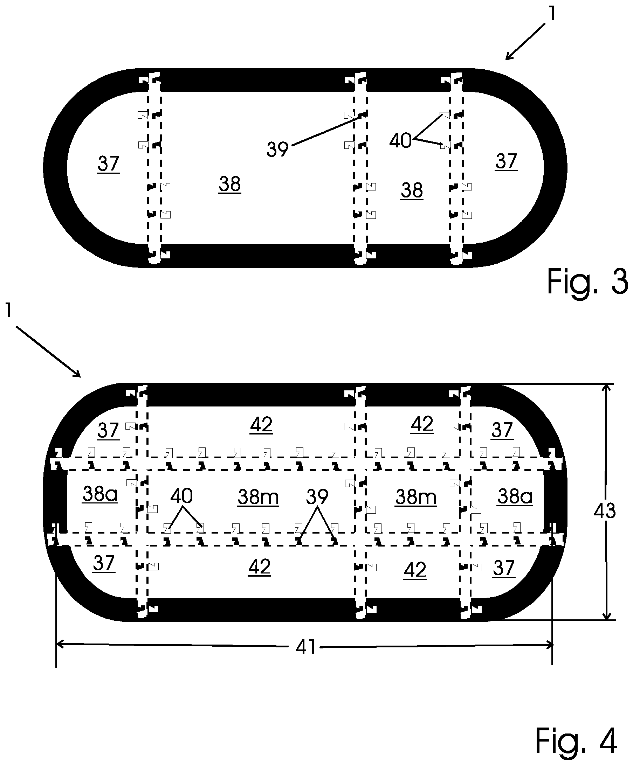

Bei der mehrteiligen Ausführung der Aufnahmeform 1 gemäß Figur 3 wird zur lösbaren Verbindung der Einzelstücke 37 und Zwischen-Einzelstücke 38 ebenfalls vom Prinzip der federnden Klipp- bzw. Schnapphakenbefestigung Gebrauch gemacht. Dazu sind an den Außenseiten der Einzelstücke 37, 38 federnde Einschnappvorsprünge 39 ausgebildet, denen an gegenüberliegend zugeordneten Seiten benachbarter (Zwischen-)Einzelstücke 37, 38 komplementär geformte Einrastbohrungen 40 zugeordnet sind. Damit lassen sich die Zwischen-Einzelstücke 38 zur Verlängerung der Form miteinander und mit dem jeweiligen (äußeren) außen bogenförmigen (End-)Einzelstück 37 verrasten. Zum Lösen können (nicht gezeichnete) Aussparungen vorgesehen sein, um die Einschnappvorsprünge 39 in den komplementären Einrastbohrungen 40 manuell zurückzuverstellen, bis ein Hintergreifen einer Abstufung der Einrastbohrung 40 durch den Einschnapp-Vorsprung 39 beseitigt ist.

Gemäß Figur 4 lässt sich eine erfindungsgemäße, ursprünglich kreisrunde Form aus vier rundlich geformten Einzelstücken 37 nicht nur in eine Richtung verlängern, sondern auch (gleichzeitig) verbreitern. Mit den vier Einzelstücken 37, die gemäß Figur 4 am äußeren Rand rundlich oder kreisartig gebogen sind, ließe sich allein eine etwa kreisrunde Form bereits zusammensetzen. Zweck beim Ausführungsbeispiel nach Figur 4 ist es jedoch, die Form in wenigstens zwei unterschiedliche, zueinander orthogonale Richtungen erweitern zu können. Dies lässt sich dadurch erreichen, dass einerseits die längeren Längsseiten 41 am jeweiligen Ende von den außen gerundeten Einzelstücken 37 und dazwischen durch zwei Rand-Einzelstücke 42 zusammengesetzt sind. Analog zur Figur 3 (siehe dortige Zwischen-Einzelstücke 38) besitzen auch die Rand-Einzelstücke 42 unterschiedliche Längen. Die Verbreiterung der kürzeren Schmalseiten 43 gelingt durch zwei jeweils außen angeordnete Zwischen-Einzelstücke 38a, die sich zwischen zwei außen gerundeten Einzelstücken 37 befinden. Zur Bildung des Bodens der Form 1 sind die beiden äußeren Zwischen-Einzelstücke 38a über zwei jeweils angefügte und aneinander gereihte Mittel-Einzelstücke 38m zu einer Gesamtreihe verbunden. Es liegt aber auch im Rahmen der Erfindung, alle Zwischen-Einzelstücke 38a, 38m oder Rand-Einzelstücke 42 jeweils als ein einziges Zwischen- bzw. Rand-Einzelstück auszuführen und zur Verbreiterung einzusetzen.

### Bezugszeichenliste

- 1: Form
- 2: Seitenwandung
- 3: Boden
- 3a: Bodenebene
- 4, 4a, 4b: Seitenrippe
- 5: Lüftungsschlitze bzw. Durchbrechung
- 6: Verbindungsstege
- 6a: freies Stegende
- 6b: Umfangssteg
- 7: Krümmungsabschnitt
- 8: Forminnere
- 9: untere Spitze der Seitenrippe 4
- 10: Außentangente
- 11: Tangenten-Winkel
- 12: Stapelnase
- 13: Kehlung
- 14: konvexe Wölbung
- 15: Innenkurve
- 16: Außenkurve
- 17: Spitze
- 18: Griffnasen
- 19: Aufstandsfläche
- 20: Sägezahnprofil
- 21: Mehl-Ablagefläche
- 22: Mehlrückhaltesockel
- 23: Dreiecksschenkel
- 24: Dreiecksschenkel
- 25: Bodennormale
- 26a: untere Innentangente
- 26b: obere Innentangente
- 27a: unterer Entforumungswinkel
- 27b: oberer Entformungswinkel
- 28: Bodenrippe
- 29: Bodenlüftungsschlitze
- 30, 30a: Fußsteg
- 31: Führungsnut
- 31a: Keilwinkel
- 32: Innenflanken
- 33: Abstufung
- 34: Klipp bzw. Schnapphaken
- 35: Hakenende
- 36: Nutbasis
- 37: Einzelstück
- 38, 38a, 38m: Zwischen-Einzelstücke
- 39: Einschnapp-Vorsprung
- 40: Einrastbohrung
- 41: Längsseiten
- 42: Rand-Einzelstücke
- 43: Schmalseiten

## Patentansprüche

1. Vorrichtung zur Aufnahme von Teiglingen, insbesondere für deren Gärung, ausgebildet als Form (1) mit einem Boden (3) und einer Seitenwandung (2) aus Kunststoff, welche mit miteinander verbundenen Seitenrippen (4, 4a) und zumindest teilweise mit dazwischen angeordneten Lüftungsschlitzen, Durchgängen oder sonstigen Durchbrechungen (5) versehen ist, **dadurch gekennzeichnet, dass** die Seitenrippen (4, 4a) auf der Außenseite der Form (1), in ihrer näher zum Boden (3) liegenden Hälfte, im Bereich der von ihnen begrenzten Durchbrechungen (5), zur Ausbildung eines nach schräg oben führenden Abluftwegs für warme Feuchtigkeit enthaltende Luft aus einem Forminneren (8), derart kurvenförmig und/oder derart gekrümmt ausgebildet sind, dass eine an die Kurve beziehungsweise Krümmung einer Seitenrippe (4,4a) gelegte Außentangente (10) in ihrer Verlängerung mit der Ebene des Bodens (3) einen Tangenten-Winkel (11) größer als Null einschließt, wobei die Außentangente (10) einen spitzen und nach außen geneigten Tangentenwinkel (11) größer als 5° und/oder kleiner als 85° mit der Bodenebene (3a) einschließt.

2. Vorrichtung nach Anspruch 1, **dadurch gekennzeichnet, dass** die Seitenrippen (4, 4a) durch vorzugsweise zum Boden (3) verlaufende Verbindungs-Stege (6) miteinander verbunden sind.

3. Vorrichtung nach einem der vorangehenden Ansprüche, **dadurch gekennzeichnet, dass** im oberen Bereich der Verbindungs-Stege (6) und/oder in einem oberen Rand- oder Öffnungsbereich der Form (1) an deren Seitenwandung (2) eine oder mehrere Stapeleinrichtungen zum platzsparenden Stapeln der Form (1) in Kontakt mit anderen Formen oder sonstigen Gegenständen vorgesehen sind.

4. Vorrichtung nach Anspruch 3, **dadurch gekennzeichnet, dass** die Stapeleinrichtung als Nase (12) oder sonstiger Vorsprung und/oder als Kehlung (13) jeweils an der Außenseite der Form (1) ausgebildet sind.

5. Vorrichtung nach einem der vorangehenden Ansprüche, **dadurch gekennzeichnet, dass** die Innenseiten der Seitenrippen (4, 4a, 4b) derart kurvenförmig (15) und/oder derart gekrümmt und/oder derart geneigt ausgebildet sind, dass eine an die Innenseite gelegte Innentangente (26a, 26b) mit einer quer oder senkrecht zum Boden (3) verlaufenden Bodennormalen (25) einen Entformungswinkel (27a, 27b) einschließt, der bei den näher dem Formboden (3) gelegenen Seitenrippen (4a) größer als bei den näher einer Formoberkante oder einem oberen Öffnungsrand gelegenen Seitenrippe (4b) ist.

6. Vorrichtung nach Anspruch 5, **dadurch gekennzeichnet, dass** der Entformungswinkel (27a, 27b) der Innentangente (26a, 26b) mit der Bodennormalen (25) bei den Seitenrippe (4a) näher dem Formboden (3) zwischen 20° und 26°, beispielsweise 23° beträgt und bei den Seitenrippen (4b) näher der Formoberkante zwischen 14° und 20°, beispielsweise 17° beträgt.

7. Vorrichtung nach einem der vorangehenden Ansprüche, **dadurch gekennzeichnet, dass** der Boden (3) der Form (1) aus Bodenrippen (28) gebildet ist, zwischen denen zumindest teilweise Durchbrechungen angeordnet sind.

8. Vorrichtung nach Anspruch 7 **dadurch gekennzeichnet, dass** die Bodenrippen (28) am Formboden (3) durch Fuß-Stege (30, 30a) verbunden sind, vorzugsweise in Form eines Sechssterns oder sonstigen Sterns, wobei die Fuß-Stege (30, 30a) von der Unterseite der Bodenrippe (30, 30a) nach außen unter Bildung eines oder mehrerer Formenfüße vorspringen.

9. Vorrichtung nach Anspruch 7 oder 8, **dadurch gekennzeichnet, dass** an der Außen- oder Unterseite des Formenbodens (3) ein vorspringender Fußring ausgebildet ist, der Durchbrechungen oder Bodenlüftungsschlitze (29) für Abluft aus der Form (1) aufweist.

10. Vorrichtung nach einem der Ansprüche 7 bis 9, **gekennzeichnet durch** an der Bodenaußen- oder -unterseite vorspringende Aufstandsstege.

11. Vorrichtung nach einem der Ansprüche 7 bis 10, **dadurch gekennzeichnet, dass** die Bodenrippen (28) ganz oder teilweise auf ihren Innenseiten mit Riefen, Rillen oder sonstigen Vertiefungen versehen sind.

12. Vorrichtung nach einem der vorangehenden Ansprüche, **dadurch gekennzeichnet, dass** die Form (1) aus einem geschäumten und/oder porösen Kunststoff oder Kunstoffverbund mit mehreren Material- und/oder Stoffkomponenten hergestellt ist.

13. Vorrichtung nach Anspruch 12, **dadurch gekennzeichnet, dass** dem Kunststoff oder Kunststoffverbund Zuschlagsstoffe wie beispielsweise Holz, Zellstoff und/oder Hornspäne zugefügt sind.

14. Vorrichtung nach Anspruch 12 oder 13, **dadurch gekennzeichnet, dass** der Kunststoff geschäumtes Polypropylen oder geschäumtes Polyurethan ist.

15. Vorrichtung nach einem der vorangehenden Ansprüche, **dadurch gekennzeichnet, dass** die Form (1) aus einem Kunststoff heller, Temperatur reflektierender Farbe, vorzugsweise Hellblau, helles Elfenbein etwa gemäß RAL 1015 und/oder Weißgrün etwa gemäß RAL 6019, hergestellt ist.

## Claims

1. Device for holding dough items, mainly for proofing, shaped as a basket (1) with a base (3) and a side wall (2) made of plastic, with interlinked side ribs (4, 4a) and at least in parts with ventilation slits, openings or other through holes (5), **characterized in that** the side ribs (4, 4a) on an outside of the basket (1) on the half that is closer to the base (3) and in an area of and delimited by the through holes (5) are curved or bent in such a way, to mark a ventilation duct, which is directed diagonally upward, for warm, humidity-containing air from the inside of the basket (8), that the extension of an outside tangent (10) positioned next to the curve or bend of one said side rib (4,4a) encloses a tangent angle (11) larger than zero with the level of the base (3), wherein the outside tangent (10) encloses an acute tangent angle (11), tilted outward, with the base level (3a), which is wider than 5° and/or narrower than 85°.

2. Device according to claim 1, wherein the side ribs (4, 4a) are interlinked by means of bridges (6), preferably wherein the bridges run to the base (3).

3. Device according to any preceding claim, **characterized in that** in an upper part of the bridges (6) and/or in the area of the upper edge or opening of the basket (1), one or several stacking devices are formed at the side wall (2) allowing the basket (1) to be space-savingly stacked on top of other baskets or other items.

4. Device according to claim 3, **characterized in that** the stacking device is formed as noses (12) or any other ledge and/or grooving (13) on the outside of the basket (1).

5. Device according to any preceding claim, **characterized in that** the insides of the side ribs (4, 4a, 4b) are bent (15) and/or curved and/or sloped, so that an inside tangent (26a, 26b) positioned next to the inside encloses a draft angle (27a, 27b) with a base normal (25) running diagonally or vertically to the base (3) that is wider at the side ribs (4a) closer to the basket base (3) than at the side ribs (4b) closer to un upper edge of the basket or an upper opening edge.

6. Device according to claim 5, **characterized in that** the draft angle (27a, 27b) of the inside tangent (26a, 26b) with the base normal (25) at the side ribs (4a) closer to the basket base (3) is between 20° and 26°, for example 23°, and at the side ribs (4b) closer to the upper edge of the basket is between 14° and 20°, for example *17*°.

7. Device according to any preceding claim, **characterized in that** the base (3) of the basket (1) consists of base ribs (28) with at least in part through holes in between.

8. Device according to claim 7, **characterized in that** the base ribs (28) on the basket base (3) are interlinked with bridges (30, 30a), preferably in the form of a six-pointed star or any other star, with the bridges (30, 30a) protruding from the bottom side of the side rib (30, 30a) to the outside or downwards, forming one of several legs.

9. Device according to claim 7 or claim 8, **characterized in that** at the outside or bottom side of the basket base (3) there is a protruding base ring with through holes or base ventilation slits (29) for the outgoing air from the basket (1).

10. Device according to any one of claims 7 to 9, **characterized in that** there are protruding support bars on the outside or bottom side of the base.

11. Device according to any one of claims 7 to 10, **characterized in that** the base ribs (28) are completely or partially equipped with grooves, creases or any other dents.

12. Device according to any preceding claim, **characterized in that** the basket (1) is made of a foamed and/or porous plastic or plastic compound of several materials and/or material components.

13. Device according to claim 12, **characterized in that** additives such as for example wood, cellulose, and/or horn chippings are added to the plastic or plastic compound.

14. Device according to claim 12 or claim 13, **characterized in that** the plastic is foamed polypropylene or foamed polyurethane.

15. Device according to any preceding claim, **characterized in that** the basket (1) is made of brightly-colored plastic with temperature-reflecting color, preferably bright blue, light ivory according to RAL 1015, and/or white-green according to for example RAL 6019.

## Revendications

1. Dispositif pour recevoir des portions de pâte, en particulier pour leur fermentation, ayant la forme d'un moule (1) avec une base (3) et une paroi latérale (2) en matière plastique, lequel dispositif comporte des nervures latérales (4, 4a) reliées les unes aux autres et au moins en partie avec interposition de fentes de passage d'air, d'ouvertures ou autres trous traversants (5), **caractérisé en ce que,** dans leur moitié la plus proche de la base (3), dans la région des trous traversants (5) qu'elles limitent, pour former un chemin d'écoulement menant en diagonale vers le haut pour l'air chaud et humide sortant d'un espace intérieur du moule (8), les nervures latérales (4, 4a) sur le côté extérieur du moule (1) sont incurvées ou courbées de telle façon qu'une tangente externe (10) positionnée à la suite de l'incurvation ou de la courbure d'une nervure latérale (4, 4a) fasse avec le plan de la base (3) un angle de tangente (11) plus grand que zéro, dans lequel la tangente externe (10) fait un angle de tangente (11) aigu et orienté vers l'extérieur qui est plus grand que 5° et/ou plus petit que 85° par rapport au plan de base (3a).

2. Dispositif selon la revendication 1, **caractérisé en ce que** les nervures latérales (4, 4a) sont reliées les unes aux autres de préférence au moyen de ponts de liaison (6) se développant vers la base (3).

3. Dispositif selon l'une quelconque des revendications précédentes, **caractérisé en ce que** dans la partie supérieure des ponts de liaison (6) et/ou dans une région du bord supérieur ou de l'ouverture du moule (1), un ou plusieurs dispositifs d'empilage sont formés sur la paroi latérale (2) pour empiler selon un écartement réduit le moule (1) en contact avec d'autre moules ou d'autres objets.

4. Dispositif selon la revendication 3, **caractérisé en ce que** les dispositifs d'empilement ont chacun la forme de nez (12) ou d'autres protubérances et/ou la forme de rainures (13) sur le côté extérieur du moule (1).

5. Dispositif selon l'une quelconque des revendications précédentes, **caractérisé en ce que** les côtés intérieurs des nervures latérales (4, 4a, 4b) sont incurvés (15) et/ou courbés et/ou en pente, de façon qu'une tangente intérieure (26a, 26b) positionnée à la suite du côté intérieur fasse un angle de dépouille (27a, 27b) avec une normale à la base (25) qui se développe en croix ou perpendiculairement par rapport à la base (3), lequel angle de dépouille est plus grand sur les nervures latérales (4a) qui sont plus proches de la base (3) du moule que sur les nervures latérales (4b) qui sont plus proches d'un bord supérieur du moule ou d'une ouverture supérieure.

6. Dispositif selon la revendication 5, **caractérisé en ce que**, sur les nervures latérales (4a) qui sont plus proches de la base (3) du moule, l'angle de dépouille (27a, 27b) entre la tangente intérieure (26a, 26b) et la normale à la base (25) est compris entre 20° et 26°, par exemple 23°, et sur les nervures latérales (4b) qui sont plus proches du bord supérieur du moule l'angle de dépouille est compris entre 14° et 20°, par exemple 17°.

7. Dispositif selon l'une quelconque des revendications précédentes, **caractérisé en ce que** la base (3) du moule (1) est formée de nervures de base (28), entre lesquelles sont disposés au moins en partie des trous traversants.

8. Dispositif selon la revendication 7, **caractérisé en ce que** les nervures de base (28) sur la base (3) de moule sont reliées par des ponts de pied (30, 30a), de préférence sous la forme d'étoiles à six branches ou d'autres étoiles, dans lequel les ponts de pied (30, 30a) font saillie depuis le côté inférieur des nervures de fond (30, 30a) vers l'extérieur en formant un ou plusieurs pieds de moule.

9. Dispositif selon la revendication 7 ou 8, **caractérisé en ce que** sur le côté extérieur ou inférieur de la base (3) de moule il est formé un anneau de pied dépassant, lequel comprend des trous traversants ou des fentes de ventilation de base (29) pour la sortie d'air hors du moule (1).

10. Dispositif selon l'une quelconque des revendications 7 à 9, **caractérisé par** des barres de soutien en saillie dépassant de la face extérieure ou du côté inférieur de la base.

11. Dispositif selon l'une quelconque des revendications 7 à 10, **caractérisé en ce que** les nervures de base (28) sont complètement ou partiellement munies de rainures, de gorges ou d'autres évidements sur leur côté intérieur.

12. Dispositif selon l'une quelconque des revendications précédentes, **caractérisé en ce que** le moule (1) est constitué à partir d'une matière plastique en mousse et/ou poreuse ou en un composé plastique de plusieurs matériaux et/ou de composants de tissus.

13. Dispositif selon la revendication 12, **caractérisé en ce que** dans les agrégats de matière plastique ou de composé plastique sont ajoutés par exemple des copeaux de bois, de cellulose et/ou de corne.

14. Dispositif selon l'une des revendications 12 ou 13, **caractérisé en ce que** la matière plastique est de la mousse de polypropylène ou de la mousse de polyuréthane.

15. Dispositif selon l'une quelconque des revendications précédentes, **caractérisé en ce que** le moule (1) est constitué d'une matière plastique brillante, ayant une couleur qui réfléchit la température, de préférence bleu clair, ivoire brillant selon RAL 1015 et/ou vert clair selon RAL 6019.
